# EUROPEAN PATENT APPLICATION

(11) **EP 4 436 299 A1**
(43) Date of publication of application: **25.09.2024**
(21) Application number: 23737153.9
(22) Date of filing: 06.01.2023
(51) Int. Cl.: H04W 74/08

(54) **RANDOM ACCESS METHOD, TERMINAL, APPARATUS AND STORAGE MEDIUM**

(30) Priority: 06.01.2022 CN 202210011344
(71) Applicant: Datang Mobile Communications Equipment Co., Ltd., Beijing 100085 (CN)
(72) Inventor: ZHANG, Xiangdong, Beijing 100085 (CN)
(74) Representative: Cabinet Nony
(86) International application number: PCT/CN2023/070983
(87) International publication number: WO 2023/131291

(57) **Abstract**

The present disclosure relates to a random access method, a terminal, an apparatus, and a storage medium, so as to avoid congestion that may occur in the first random access process of a user terminal, improve resource utilization, and reduce access time. The method includes: obtaining configuration information of random access, the configuration information including priority indication information of first radio resource control connection establishment causes; obtaining a second radio resource control connection establishment cause of the terminal; and performing a random access process according to the second radio resource control connection establishment cause and the priority indication information in the configuration information corresponding to the first radio resource control connection establishment cause that matches the second radio resource control connection establishment cause.

## Description

### CROSS-REFERENCE TO RELATED APPLICATIONS

This application claims priority to Chinese Patent Application No. 202210011344.7, filed to the Chinese Patent Office on January 6, 2022 and entitled "RANDOM ACCESS METHOD, TERMINAL, APPARATUS, AND STORAGE MEDIUM", the entire contents of which are incorporated herein by reference.

### TECHNICAL FIELD

The present application relates to the field of satellite communication, in particular to a random access method, a terminal, an apparatus, and a storage medium.

### BACKGROUND

In a discontinuous coverage earth-fixed scenario of Internet of Things (IoT) satellite communication systems (Non-Terrestrial Networks, NTN), when a satellite coverage arrives, a large number of User Equipments (UE) in an area corresponding to the satellite coverage may all need to access the network, which may cause congestion in the first random access process, reduce the efficiency of resource utilization, and prolong the access time.

In the prior art, grouping access based on user identifiers is used to prevent congestion during the first random access. This method is too simple to improve resource utilization and reduce access time.

In view of this, how to avoid congestion that may occur in the first random access process of the user terminal, improve resource utilization, and reduce access time becomes an urgent technical problem to be solved.

### SUMMARY

The present application provides a random access method, a terminal, an apparatus, and a storage medium, so as to resolve the foregoing technical problems in the prior art.

According to a first aspect, to resolve the foregoing technical problems, an embodiment of the present application provides a random access method, applied to a terminal, and a technical solution of the method is as follows:
obtaining configuration information of random access, the configuration information including priority indication information of first radio resource control connection establishment causes;
obtaining a second radio resource control connection establishment cause of the terminal; and
performing a random access process according to the second radio resource control connection establishment cause and the priority indication information in the configuration information corresponding to the first radio resource control connection establishment cause that matches the second radio resource control connection establishment cause.

In a possible implementation, performing the random access process according to the second radio resource control connection establishment cause and the priority indication information in the configuration information corresponding to the first radio resource control connection establishment cause that matches the second radio resource control connection establishment cause includes:
performing a one-by-one matching between the first radio resource control connection establishment causes in the configuration information and the second radio resource control connection establishment cause;
determining, according to the priority indication information of the matched first radio resource control connection establishment cause, a priority corresponding to the second radio resource control connection establishment cause;
determining whether the priority corresponding to the second radio resource control connection establishment cause is higher than a priority threshold;
if yes, initiating the random access process; and
if no, performing a backoff process.

In a possible implementation, the configuration information further includes:
backoff indication information for priority of the first radio resource control connection establishment cause, and the backoff indication information for priority is configured to generate a backoff time corresponding to the priority of the first radio resource control connection establishment cause.

In a possible implementation, performing the backoff process includes:
obtaining, from the backoff indication information for priority, a backoff level corresponding to the priority corresponding to the second radio resource control connection establishment cause, the backoff level being configured to indicate a backoff time range of a corresponding priority
determining, according to the backoff time range corresponding to the backoff level, a backoff time corresponding to the second radio resource control connection establishment cause; and
initiating the random access process after delaying the backoff time corresponding to the second radio resource control connection establishment cause.

In a possible implementation, determining, according to the backoff time range corresponding to the backoff level, the backoff time corresponding to the second radio resource control connection establishment cause includes:
randomly generating a random number within the backoff time range corresponding to the backoff level; and
generating the backoff time corresponding to the second radio resource control connection establishment cause according to the random number.

In a possible implementation, obtaining the configuration information of random access includes:
receiving the configuration information of random access sent by a network side; or
obtaining the configuration information of random access from predefined information, and the predefined information is pre-configured in the terminal or predefined in a related standard.

In a possible implementation, the random access process is the first random access process after a satellite cell coverage change in an area in which the terminal is located.

In a possible implementation, determining the priority corresponding to the second radio resource control connection establishment cause further includes:
obtaining power-related information of the terminal; and
adjusting the priority corresponding to the second radio resource control connection establishment cause according to the power-related information of the terminal.

In a possible implementation, before adjusting the priority corresponding to the second radio resource control connection establishment cause according to the obtained power-related information, the method further includes:
obtaining indication information, the indication information being configured to indicate whether the power-related information of the terminal is involved in determining the priority corresponding to the second radio resource control connection establishment cause.

In a possible implementation, the power-related information of the terminal includes:
a remaining power status of the terminal or power consumption sensitivity information of the terminal.

In a possible implementation, the radio resource control connection establishment cause includes:
at least one of an access corresponding to a first service or an access corresponding to a second service that is not completed during a previous satellite cell coverage

In a possible implementation, the first service includes:
an emergency call access service, a voice access service, or a data access service, the voice access service including a first called voice access or a calling voice access.

In a possible implementation, the second service includes:
a second called voice access, a second called data access, or a service access that initiates the second service.

In a possible implementation, the priority indication information includes:
one or more priorities of the first radio resource control connection establishment causes and corresponding first radio resource control connection establishment causes; or
one or more of the first radio resource control connection establishment causes and corresponding priorities.

According to a second aspect, to resolve the foregoing technical problems, an embodiment of the application provides a random access method, applied to a network side, and a technical solution of the method is as follows:
determining configuration information of random access, the configuration information including priority indication information of first radio resource control connection establishment causes; and
transmitting the configuration information.

In a possible implementation, after transmitting the configuration information, the method further includes:
transmitting indication information to a terminal, the indication information being configured to indicate whether power-related information of the terminal is involved in determining the priority of the second radio resource control connection establishment cause of the terminal.

In a possible implementation, transmitting the configuration information includes:
transmitting a broadcast message or a dedicated message, the broadcast message or the dedicated message carrying the configuration information.

According to a third aspect, an embodiment of the present application further provides a terminal, including a memory, a transceiver, and a processor.

The memory is configured to store a computer program. The transceiver is configured to receive and transmit data under control of the processor. The processor is configured to read the computer program in the memory and perform the random access method provided in the first aspect.

According to a fourth aspect, an embodiment of the present application further provides a random access apparatus, applied to a network side, including a memory, a transceiver, and a processor.

The memory is configured to store a computer program. The transceiver is configured to receive and transmit data under control of the processor. The processor is configured to read the computer program in the memory and perform the random access method provided in the second aspect.

According to a fifth aspect, an embodiment of the present application provides a terminal, including:
an obtaining unit configured to obtain configuration information of random access, the configuration information including priority indication information of first radio resource control connection establishment causes; and obtain a second radio resource control connection establishment cause of the terminal; and
a performing unit configured to perform a random access process according to the second radio resource control connection establishment cause and the priority indication information in the configuration information corresponding to the first radio resource control connection establishment cause that matches the second radio resource control connection establishment cause.

According to a sixth aspect, an embodiment of the present application further provides a random access apparatus, applied to a network side. The apparatus includes:
a determining unit configured to determine configuration information of random access, the configuration information including priority indication information of first radio resource control connection establishment causes; and
a transmitting unit configured to transmit the configuration information.

According to a seventh aspect, an embodiment of the present application further provides a processor-readable storage medium, the processor-readable storage medium stores a computer program, and the computer program is configured to cause the processor to perform the method according to the first aspect or the second aspect.

By using the technical solutions in the foregoing one or more embodiments of the embodiments of the present application, the embodiments of the present application have at least the following technical effects.

In the embodiments provided in the present application, by obtaining the configuration information of random access and the second radio resource control connection establishment cause of the terminal, the random access is performed according to the second radio resource control connection establishment cause and the priority indication information in the configuration information corresponding to the first radio resource control connection establishment cause that matches the second radio resource control connection establishment cause. The configuration information includes the priority indication information of the first radio resource control connection establishment causes. After the area in which the terminal is located handed over from a previous satellite cell to a next satellite cell, the terminals in the area can re-access the network side without swarming to access the network simultaneously as in the related art. Instead, each terminal performs the random access by situations according to the priority indication information corresponding to its second radio resource control connection establishment cause, thereby avoiding congestion that may occur in the first random access process of the terminal, improving resource utilization, reducing access time, and improving user experience.

### BRIEF DESCRIPTION OF THE DRAWINGS

FIG. 1 is a schematic diagram showing a satellite communication scenario based on a transparent forwarding mode;
FIG. 2 is a schematic diagram showing a serving cell of an Earth-Fixed satellite;
FIG. 3 is a schematic diagram showing a satellite cell of an Earth-moving satellite;
FIG. 4 is a flowchart showing a random access method on a terminal side according to an embodiment of the present application;
FIG. 5 is a flowchart showing a random access method on a network side according to an embodiment of the present application;
FIG. 6 is a schematic diagram showing a structure of a terminal according to an embodiment of the present application;
FIG. 7 is a schematic diagram showing a structure of a random access apparatus according to an embodiment of the present application;
FIG. 8 is a schematic diagram showing a structure of another terminal according to an embodiment of the present application;
FIG. 9 is a schematic diagram showing a structure of another random access apparatus according to an embodiment of the present application.

### DETAILED DESCRIPTION

In embodiments of the present application, the term "and/or" describes an relationship between associated objects, indicating that there may be three relationships. For example, A and/or B may represent the following three cases: only A exists, both A and B exist, and only B exist. The character "/" generally indicates that the associated objects are in an "or" relationship.

In the embodiments of the present application, the term "a plurality of" means two or more, and other quantifiers are intended to have a similar meaning.

The technical solutions in the embodiments of the present application will be described clearly and completely below in conjunction with the accompanying drawings in the embodiments of the present application. Apparently, the described embodiments are only a part of embodiments of the present application but not all embodiments. Based on the embodiments of the present application, all other embodiments obtained by those ordinary skilled in the art without creative work fall within the protection scope of the present application.

The technical solutions provided in the embodiments of the present application may be applicable to various systems, especially 5G systems. For example, the applicable system may be a Global System of Mobile Communication (GSM) system, a Code Division Multiple Access (CDMA) system, a Wideband Code Division Multiple Access (WCDMA) General Packet Radio Service (GPRS) system, a Long Term Evolution (LTE) system, a LTE Frequency Division Duplex (FDD) system, an LTE Time Division Duplex (TDD) system, a Long Term Evolution Advanced (LTE-A) system, a Universal Mobile Telecommunication System (UMTS), a Worldwide interoperability for Microwave Access (WiMAX) system, and a 5G New Radio (NR) system, etc. Each of the various systems includes terminal devices and network devices. The system may further include a core network part, such as an Evolved Packet System (EPS), a 5G system (5GS), etc.

The terminal device involved in the embodiments of the present application may be a device that provides voice and/or data connectivity to a user, a handheld device with a wireless connection function, or other processing devices connected to a wireless modem, etc. In different systems, the terminal device may have different names. For example, in a 5G system, the terminal device may be referred to as User Equipment (UE). A wireless terminal device can communicate with one or more Core Networks (CN) via a Radio Access Network (RAN). The wireless terminal device may be a mobile terminal device, such as a mobile phone (or referred to as a "cellular" phone) and a computer with the mobile terminal device, including, for example, a portable mobile device, pocket-sized mobile device, handheld mobile device, computer built-in mobile device, or vehicle-mounted mobile device that exchanges voice and/or data with the radio access network. For example, the wireless terminal device may be a Personal Communication Service (PCS) phone, a cordless phone, a Session Initiated Protocol (SIP) phone, a Wireless Local Loop (WLL) station, or a Personal Digital Assistant (PDA), etc. The wireless terminal device may also be referred to as a system, a subscriber unit, a subscriber station, a mobile station, a mobile, a remote station, an access point, a remote terminal, an access terminal, a user terminal, a user agent, and a user device, and is not limited in the embodiments of the present application.

The network device involved in the embodiments of the present application may be a base station, which may include a plurality of cells that provide service for terminals. Depending on different specific application scenarios, the base station may also be referred to as an access point, or may refer to a device in an access network communicating with the wireless terminal device via one or more sectors on an air interface, or other names. The network device may be configured to perform inter-conversion between a received air frame and an Internet Protocol (IP) packet, and used as a router between the wireless terminal device and the rest of the access network. The rest of the access network may include an Internet Protocol (IP) communication network. The network device may further coordinate the attribute management of the air interface. For example, the network device involved in the embodiments of the present application may be a network device (Base Transceiver Station (BTS)) in the Global System for Mobile communications (GSM) or Code Division Multiple Access (CDMA), a network device (NodeB) in the Wideband Code Division Multiple Access (WCDMA), an evolutional Node B (eNB or e-NodeB) in the Long Term Evolution (LTE) system, a 5G base station (gNB) in the 5G network architecture (next generation system), a Home evolved Node B (HeNB), a relay node, a home base station (femto), or a pico base station (pico), etc., and is not limited in the embodiments of the present application. In some network structures, the network device may include a centralized unit (CU) node and a distributed unit (DU) node, and the centralized unit and the distributed unit may also be geographically separated.

There are two working modes in satellite communication.

One mode is a transparent forwarding mode, in which the satellite only transparently forwards signals without any processing, and terminals communicate with gateway stations, i.e., the satellite only performs operations such as frequency conversion and radio signal amplification of uplink/downlink signals, similar to the function of a radio frequency relay.

The other mode is a regenerative communication mode, in which the satellite can detect information of a received signal and process and forward the signal, realizing the function of a base station, i.e., connecting terminals and gateway stations. That is, the satellite can perform functions such as frequency conversion, radio signal amplification, coding/modulation, and demodulation/decoding of uplink/downlink signals. In other words, the satellite in regenerative communication mode may have all or part of functions of gNB and can regenerate signals.

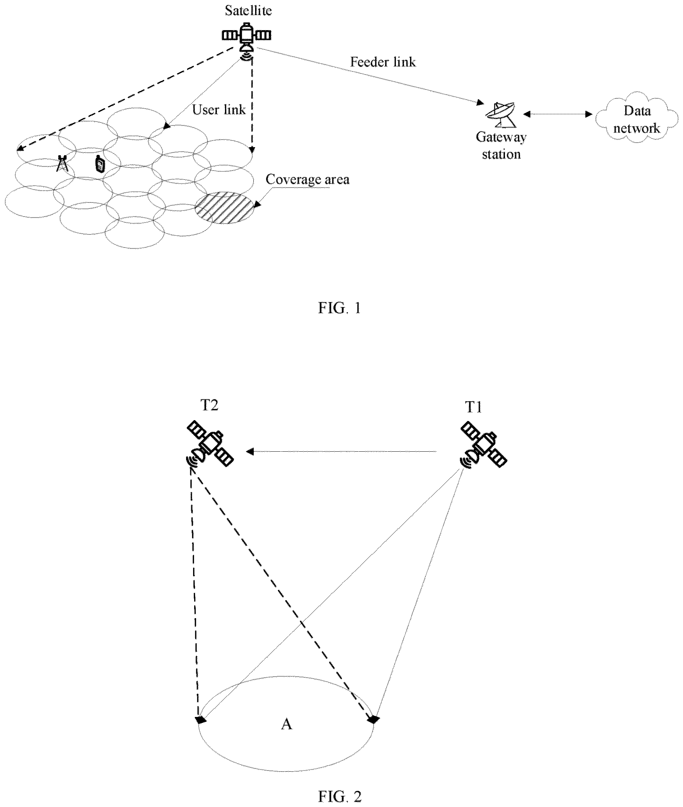

FIG. 1 is a schematic diagram of a satellite communication scenario based on the transparent forwarding mode.

In satellite communication, a connection between a terminal and a satellite is referred to as a user link, a connection between a satellite and a gateway station is referred to as a feeder link, and an area covered by the satellite's beam projected on the ground is referred to as a coverage area (as shown in the elliptical area covered by the shadow in FIG. 1, which may also be referred to as a serving cell).

Depending on whether the satellite cell corresponding to the satellite is fixed, satellites may also be classified as Earth-fixed satellites and Earth-moving satellites.

The Earth-fixed satellite means that the coverage area of the satellite's serving cell on the ground does not change with the movement of the satellite over a certain period of time, i.e., the satellite operates in a "stare" mode. The satellite is moving, but over a certain period of time, it appears to "stare" at a certain area on the ground. As shown in FIG. 2, which is a schematic diagram of a serving cell of an Earth-Fixed satellite, when the satellite moves from time T1 to time T2, the coverage area of the satellite's beam on the ground is always area A (a time interval between T1 and T2 is relatively short).

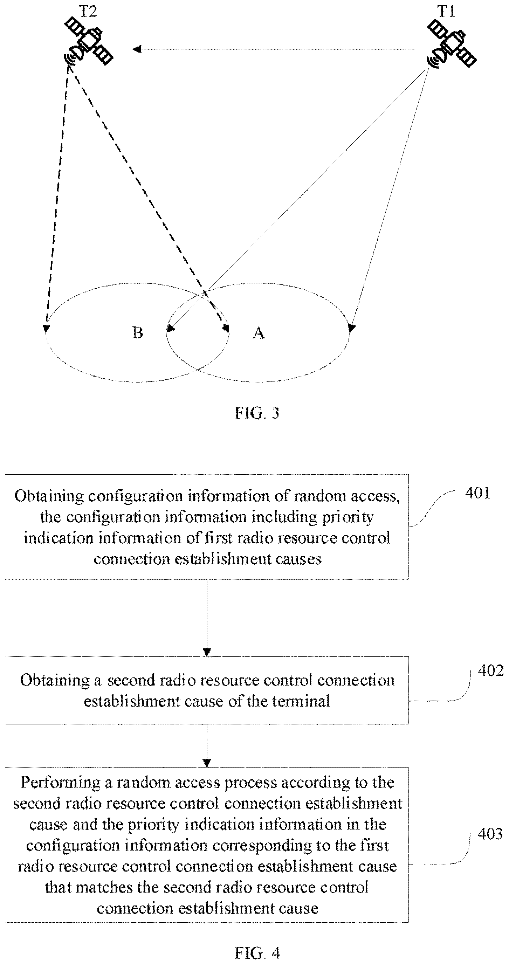

The Earth-moving satellite means that the coverage area of the satellite's serving cell on the ground changes with the movement of the satellite. As shown in FIG. 3, which is a schematic diagram of a satellite cell of an Earth-moving satellite, the coverage area of the satellite's beam in FIG. 3 is area A at time T1 and area B at time T2.

For the satellite cell of the Earth-fixed satellite (with one satellite beam corresponding to one satellite cell), when a satellite cell coverage arrives, a large number of terminals under the satellite cell coverage may all need to access the network to transmit and receive data. As shown in area A in FIG. 2, when the satellite cell covers area A in FIG. 2, a large number of terminals in area A may all need to access the network via the satellite. According to the prior art, a terminal needs to initiate a random access process to access the network. When a large number of terminals initiate random access processes at the same time, a random access conflict may occur, resulting in network access congestion, reducing resource efficiency, prolonging network access delay, and affecting user experience.

In the IoT NTN network, the number of terminals served by one NTN cell is large and much greater than the number of terminals served by one cell of the TN network, and the IoT NTN cell service has a non-continuous coverage scenario, which will lead to a possibility of a large number of terminals accessing the network at the same time in the IoT NTN cell service. Additionally, a Round-Trip Time (RTT) of the IoT NTN network is very long and one random access process takes a relatively long time, so that network access congestion is more likely to occur in the IoT NTN network, resulting a longer network access delay and a lower resource utilization.

To resolve the foregoing problems, the embodiments of the present application provide a random access method, a terminal, an apparatus, and a storage medium, so as to avoid congestion that may occur during the first random access process of user terminals, improve resource utilization, and reduce access time.

The method and the apparatus are based on the same application concept. Since the principles of the method and apparatus for solving the problems are similar, the implementations of the apparatus and method may refer to each other, with repeated descriptions omitted.

Referring to FIG. 4, an embodiment of the present application provides a random access method, which is applied to a terminal. A processing process of the method is as follows.

In step 401, configuration information of random access is obtained. The configuration information includes priority indication information of first radio resource control connection establishment causes.

In step 402, a second radio resource control connection establishment cause of a terminal is obtained.

In step 403, a random access process is performed according to the second radio resource control connection establishment cause and the priority indication information in the configuration information corresponding to the first radio resource control connection establishment cause that matches the second radio resource control connection establishment cause.

The random access process in step 403 is the first random access process after a satellite cell coverage change in the area in which the terminal is located. One satellite cell may include at least one beam of a corresponding satellite. When the satellite corresponding to the area in which the terminal is located changes, i.e., the satellite coverage of the area in which the terminal is located changes, the satellite cell corresponding to the area in which the terminal is located is considered to be changed. However, when the beam corresponding to the same satellite changes in the same satellite cell, it is considered that the satellite cell is not changed.

When the network side changes the coverage area of the satellite cell, it transmits indication information. The first system message transmitted in the changed coverage area is the current system message. The terminal may determine, according to a time point of receiving the first system message, the first random access time slot after the time point as the time slot for the first random access when the network coverage arrives.

For example, taking FIG. 3 as an example, the coverage area of the satellite cell is area A at time T1, and the coverage area of the satellite cell will be changed to area B at time T2. Typically, before the satellite cell covers area B (i.e., before the network coverage of area B arrives), the terminals in area B are in an unconnected state. After changing the coverage area of the satellite cell to area B, the network side transmits the indication information (carried in the current system message) to the terminals in area B, and the terminal in area B determines, according to the time point (e.g., a time point 1) of receiving the current system message, a start time of the satellite serving cell B (in this case, area B may be considered as the serving cell of the satellite), thereby determining the first random access time slot after the time point 1 as the time slot for the first random access initialed by the terminal when the network coverage of area B arrives. The random access mentioned in the present application refers to the random access initiated by the terminal in the time slot for the first random access, or the random access initiated for the first time in the area in which the terminal is located after switching the satellite cell.

Since the random access in the embodiments of the present application is equivalent to the random access initiated by the terminal for the first time after the satellite cell in the same area has changed, the cause for the terminal to initiate the random access (i.e., the first radio resource control connection establishment cause) may be an access corresponding to a first service initiated by the terminal in the current satellite cell, or an access corresponding to a second service that is not completed by the terminal in the previous satellite cell, or both of the above. For example, when the previous satellite covers an area 1, a certain terminal in the area 1 receives a called voice access, but because the satellite covering the area 1 is changed, a satellite cell of the current new satellite covering the area 1 needs to continue to provide the called voice service (i.e., the second service) to the terminal. Therefore, the cause for the terminal to initiate the first radio resource control connection establishment in the new satellite cell covering the area 1 includes the access corresponding to the second service that already existed in the previous satellite but has not been completed. The "already existed" may be that a service instruction from the network has been received, or the terminal has generated a service instruction. The "has not been completed" means that the second service is not completed. The access corresponding to the second service may include called voice access, called data access, or the like. The radio resource control connection establishment cause corresponding to the first service initiated in the current satellite may be represented in a form of a priority of the first service. The priority of the first service is typically determined based on a delay sensitivity degree, an importance, etc., of the first service.

In the embodiments provided in the present application, to facilitate distinguishing between the possible radio resource control connection establishment cause of the terminal (i.e., the radio resource control connection establishment cause included in the configuration information) and the actual radio resource control connection establishment cause currently determined by the terminal according to a service requirement thereof, the radio resource control connection establishment cause included in the configuration information is referred to as the first radio resource control connection establishment cause, and the radio resource control connection establishment cause determined by the terminal according to the service requirement thereof is referred to as the second radio resource control connection establishment cause. The configuration information includes at least one first radio resource control connection establishment cause, and the second radio resource control connection establishment cause matches one of the first radio resource control connection establishment causes in the configuration information.

The first radio resource control connection establishment cause includes at least one of the access corresponding to the first service or the access corresponding to the second service that is not completed in the previous satellite cell. The first service includes an emergency call service, a voice access service, or a data access. The voice access service includes a first called voice access or a calling voice access. The second service includes a second called voice access, a called data access, or a service access that initiates the second service. The service access that initiates the second service includes a service access that initiates the second called voice access, or the service access that initiates the called data access. The foregoing data access may be data or voice access in an application (such as voice access and data access in WeChat or instant messaging tools). The foregoing voice access service refers to a call access service (including calling call access and called call access) in mobile communication. The first called voice access refers to the called call access that belongs to the first service, and the second called voice access refers to the called call access that belongs to the second service.

The configuration information may include the priority indication information of the first radio resource control connection establishment causes, indicating the priority corresponding to each of the first radio resource control connection establishment causes. The first radio resource control connection establishment causes and their corresponding priorities may exist in a form of a priority list. Referring to Table 1, which is a priority list of the first radio resource control connection establishment causes and their priorities provided by an embodiment of the present application (the higher the priority, the smaller the corresponding value).

**Table 1**

| First radio resource control connection establishment cause | | | Priority |
|---|---|---|---|
| First service | Emergency call access service | | 0 |
| | Voice access service | First called voice access | 3 |
| | | Calling voice access | 4 |
| | Data access service | First called data access | 3 |
| | | Calling data access | 4 |
| Second service | Second called voice access | | 1 |
| | Second called data access | | 1 |
| | Service access that initiates the second service | | 2 |

It should be understood that Table 1 only schematically shows the priorities corresponding to the first radio resource control connection establishment causes, and does not represent the priorities corresponding to the first radio resource control connection establishment causes in practical applications. In practical applications, the configuration information may not include the priority of the first radio resource control connection establishment cause corresponding to the second service which instead is determined in a manner that the terminal raises the priority of the called voice access or the called data access that belongs to the second service.

The priority indication information of the first radio resource control connection establishment causes may be a correspondence between one or more priorities of first radio resource control connection establishment causes and the corresponding first radio resource control connection establishment causes (as shown in Table 2, which is a correspondence table between the priorities of first radio resource control connection establishment causes and the first radio resource control connection establishment causes provided by an embodiment of the present application), or may be a correspondence between one or more first radio resource control connection establishment causes and the corresponding priorities (as shown in Table 1).

**Table 2**

| Priority | First radio resource control connection establishment cause |
|---|---|
| 0 | Emergency call access service of the first service |
| 1 | Second called voice access and second called data access of the second service |
| 2 | Service access for initiating a second service of the second service |
| 3 | First called voice access and first called data access of the first service |
| 4 | Calling data access of the first service |

In a possible implementation, the configuration information may further include backoff indication information for the priority corresponding to the first radio resource control connection establishment cause, and the backoff indication information is configured to generate a backoff time corresponding to the priority of the radio resource control connection establishment cause.

For example, the backoff indication information for the priority corresponding to the first radio resource control connection establishment cause includes that: priority 0 corresponds to a backoff of zero RO, priority 1 corresponds to a backoff of one RO, priority 2 corresponds to a backoff of two ROs, and priority 3 corresponds to a backoff of three ROs, etc.

For another example, the backoff indication information for the priority corresponding to the first radio resource control connection establishment cause includes that: priority 0 corresponds to a random number threshold of 0, priority 1 corresponds to a random number threshold of 1, and priority 2 corresponds to a random number threshold of 2, etc. The random number threshold is configured to indicate a backoff time range of a corresponding priority. For example, if the random number threshold is 5, the backoff time range of the corresponding priority is 0-5, and if the random number is 10, the backoff time range of the corresponding priority is 5-10.

For yet another example, the backoff indication information for the priority corresponding to the first radio resource control connection establishment cause includes that: priority 0 corresponds to a backoff time threshold of 0, priority 1 corresponds to a backoff time threshold of 1, and priority 2 corresponding to a backoff time threshold of 2, etc. The backoff time threshold is configured to indicate a backoff time range of a corresponding priority in a specified time unit. For example, if the backoff time threshold is 5, the backoff time range of the corresponding priority is 0-5 specified time units, and if the backoff time threshold is 10, the backoff time range of the corresponding priority is 5-10 specified time units.

After obtaining the configuration information of the random access, the terminal can obtain the current second radio resource control connection establishment cause of the terminal according to the service of the terminal that currently needs to establish the random access.

In the embodiments provided in the present application, the configuration information of random access may be provided by the network side to the terminal. For example, the configuration information is carried in a broadcast message, a dedicated message, or a system message, and is transmitted to the terminal through the system message, the broadcast message, or the dedicated message. The configuration information of random access may also be pre-configured in the terminal or predefined in a related standard. Therefore, in step 401, the configuration information of random access may be obtained from a system message, a broadcast message, or a dedicated message sent by the network side, or may be obtained from predefined information. For example, when the terminal is manufactured, the foregoing predefined information is preset in the terminal, or the foregoing predefined information is defined in a future related standard.

The network side may be a satellite using the regenerative communication mode, or may be a gateway station that communicates with terminals via a satellite using the transparent forwarding mode.

After the configuration information of random access and the current second radio resource control connection establishment cause of the terminal are obtained, the random access process can be performed according to them. The random access process may be initiated directly or after a backoff period.

Performing the random access process according to the second radio resource control connection establishment cause and the priority indication information in the configuration information corresponding to the first radio resource control connection establishment cause that matches the second radio resource control connection establishment cause may be implemented in the following manner:

performing a one-by-one matching between the first radio resource control connection establishment causes in the configuration information and the second radio resource control connection establishment cause; determining the priority corresponding to the second radio resource control connection establishment cause according to the priority indication information of the first radio resource control connection establishment cause that is matched; determining whether the priority corresponding to the second radio resource control connection establishment cause is higher than a priority threshold; and if yes, initiating the random access process, and if no, performing a backoff process.

For example, when the priority indication information of the first radio resource control connection establishment causes in the configuration information is the information shown in Table 1, and after a new satellite cell covers the area in which the terminal is located, the random access that the terminal needs to initiate in the first random access time slot is the emergency call access service (i.e., the second radio resource control connection establishment cause), the first radio resource control connection establishment causes in the configuration information are matched with the second radio resource control connection establishment cause one by one. According to the priority indication information of the matched first radio resource control connection establishment cause (i.e., the emergency call access service) (according to Table 1, the priority indicated by the priority indication information is 0), it is determined that the priority corresponding to the second radio resource control connection establishment cause is 0. Then, it is determined whether the priority corresponding to the second radio resource control connection establishment cause is higher than the priority threshold (assuming to be 3). The determination result is that the priority (0) corresponding to the second radio resource control connection establishment cause is higher than the priority threshold (3), so the random access process of the emergency call access service is initiated immediately.

In a possible implementation, determining the priority corresponding to the second radio resource control connection establishment cause further includes:
obtaining power-related information of the terminal; and adjusting the priority corresponding to the second radio resource control connection establishment cause according to the power-related information of the terminal.

The power-related information of the terminal may be a remaining power status of the terminal or a power consumption sensitivity information of the terminal. The power consumption sensitivity refers to a sensitivity of the terminal to power consumption. For example, when the terminal is powered by a power supply, consuming some power may be negligible for the terminal, that is, it can be considered that the power supply of the terminal is unrestricted. When the terminal is powered by a battery, if the battery capacity of the terminal is large enough, the terminal is less sensitive to power consumption. However, if the battery capacity of the terminal is small, for example, some Internet of Things devices are small in size and the battery capacity is not large, this type of terminal is sensitive to power consumption. Therefore, a corresponding power consumption sensitivity may be set for the terminal according to the power supply and the battery capacity adopted by the terminal.

For example, on the network side, it is predefined that when the remaining power status of the terminal reaches a low-power status, the originally determined priority corresponding to the second radio resource control connection establishment cause is increased by two levels. Then, when the terminal obtains that the remaining power status thereof is the low-power status, it determines the priority corresponding to the second radio resource control connection establishment cause as 1 by increasing the originally determined priority (assuming to be 3) corresponding to the second radio resource control connection establishment cause by two levels.

For another example, in the terminal, it is preset that when the power consumption sensitivity information of the terminal is high, a corresponding adjustment magnitude for the priority of the second radio resource control connection establishment cause is to increase by two levels. When the terminal obtains that the power consumption sensitivity information of the terminal is high, it determines the priority corresponding to the second radio resource control connection establishment cause as 3 by increasing the originally determined priority (assuming to be 5) corresponding to the second radio resource control connection establishment cause by two levels.

It should be noted that the definitions of the remaining power status, power consumption sensitivity information, and corresponding adjustment amplitude for the priority may be defined in a related protocol or standard, or may be preset in the terminal, without any limitations thereto.

In a possible implementation, before adjusting the priority corresponding to the second radio resource control connection establishment cause according to the obtained power-related information, the method further includes:
obtaining indication information, which is configured to indicate whether the power-related information of the terminal is involved in determining the priority corresponding to the second radio resource control connection establishment cause.

When the indication information is defined by the network side, the network side may add the indication information to a broadcast message, a system message, or a dedicated message, and transmit the broadcast message, the system message, or the dedicated message to the terminal. When the indication information is defined by a related protocol or standard or preset in the terminal, the indication information may be obtained from a corresponding channel.

After the terminal obtains the indication information, if the indication information indicates that the power-related information of the terminal is involved in determining the priority corresponding to the second radio resource control connection establishment cause, the terminal adjusts the priority corresponding to the second radio resource control connection establishment cause according to the power-related information of the terminal.

For example, after a satellite newly covers the area in which the terminal is located, a random access that the terminal needs to initiate in the first random access time slot is a calling voice access that already existed in the previous satellite but has not been completed (i.e., the second radio resource control connection establishment cause). The first radio resource control connection establishment cause that matches the second radio resource control connection establishment cause is identified from the priority indication information of the first radio resource control connection establishment causes, and the priority (assuming to be 4) corresponding to the matched first radio resource control connection establishment cause is determined as the priority corresponding to the second radio resource control connection establishment cause. Since the network side indicates that the terminal can adjust, according to the power-related information of the terminal, the priority corresponding to the second radio resource control connection establishment cause, the terminal obtains the power-related information thereof and determines that the remaining power status (assuming that the terminal is powered by a battery, and at this time, it is determined that the remaining power of the terminal is less than 5%, the corresponding remaining power status is the low-power status) meets a condition for adjusting the priority, and the priority can be increased by three levels. Therefore, the priority corresponding to the second radio resource control connection establishment cause is adjusted from 4 to 1. Then, it is determined whether the priority corresponding to the second radio resource control connection establishment cause is higher than a priority threshold (assuming to be 3). The determination result is that the priority (1) corresponding to the second radio resource control connection establishment cause is higher than the priority threshold (3), and therefore the random access process is immediately performed.

For another example, the priority indication information of the first radio resource control connection establishment causes in the configuration information is the information shown in Table 1. After a satellite newly covers the area in which the terminal is located, a new random access that the terminal needs to initiate in the first random access time slot is a calling voice access (i.e., the second radio resource control connection establishment cause). The first radio resource control connection establishment cause that matches the second radio resource control connection establishment cause is identified from the priority indication information of the first radio resource control connection establishment causes, and the priority (determined to be 4 according to Table 1) corresponding to the matched first radio resource control connection establishment cause is determined as the priority corresponding to the second radio resource control connection establishment cause. Assuming that the network side does not transmit the indication information for adjusting the priority according to the power-related information of the terminal, there is no need to adjust the priority. Then, it is determined whether the priority corresponding to the second radio resource control connection establishment cause is higher than a priority threshold (assuming to be 3). The determination result is that the priority (4) corresponding to the second radio resource control connection establishment cause is less than the priority threshold (3), and therefore a backoff process is performed.

The backoff process is implemented in the following manner:
obtaining, from the backoff indication information for priority, a backoff level corresponding to the priority corresponding to the second radio resource control connection establishment cause, the backoff level being configured to indicate a backoff time range of the corresponding priority; determining, according to the backoff time range corresponding to the backoff level, a backoff time corresponding to the second radio resource control connection establishment cause; and initiating the random access process after delaying the backoff time corresponding to the second radio resource control connection establishment cause.

For example, the backoff indication information for the priority corresponding to the first radio resource control connection establishment cause includes that: priority 0 corresponds to a backoff level of 0 (corresponding to a backoff time range of 0), priority 1 corresponds to a backoff level of 1 (corresponding to a backoff time range of (0, 5]), priority 2 corresponds to a backoff level of 2 (corresponding to a backoff time range of (5, 10]), and priority 3 corresponds to a backoff level of 3 (corresponding to a value range of (10, 15]). If it is determined, by using the solution provided in the present application, that the priority of the second radio resource control connection establishment cause of the terminal is 2, it may be determined from the backoff indication information for the priority corresponding to the first radio resource control connection establishment cause that the backoff level corresponding to the priority of the second radio resource control connection establishment cause is 2, and the corresponding backoff time range is (5, 10]. A time may be selected from the backoff time range as the backoff time corresponding to the first radio resource control connection establishment cause, and then the random access process is initiated after delaying the backoff time corresponding to the second radio resource control connection establishment cause.

In a possible implementation, determining, according to the backoff time range corresponding to the backoff level, the backoff time corresponding to the second radio resource control connection establishment cause may be implemented in the following manner:
randomly generating a random number within the backoff time range corresponding to the backoff level; and generating the backoff time corresponding to the second radio resource control connection establishment cause according to the random number.

The backoff level may be a random number threshold, or may be a backoff time threshold in a specified time unit.

For example, the backoff indication information for the priority corresponding to the first radio resource control connection establishment cause includes: the random number threshold corresponding to priority 0 is 0, the random number threshold corresponding to priority 1 is 5 (the corresponding value range is (0, 5]), the random number threshold corresponding to priority 2 is 10 (the corresponding value range is (5, 10]), the random number threshold corresponding to priority 3 is 15 (the corresponding value range is (10, 15]), and the random number threshold corresponding to priority 4 is 20 (the corresponding value range is (15, 20]). If it is determined, by using the solution provided in the present application, that the priority of the second radio resource control connection establishment cause of the terminal is 2, it may be determined from the backoff indication information for the priority corresponding to the first radio resource control connection establishment cause that the random number threshold corresponding to the priority of the second radio resource control connection establishment cause is 10. Then, a random number (assuming to be 6) is randomly generated within the range of (5, 10], and the backoff time corresponding to the second radio resource control connection establishment cause is generated according to the random number of 6. The terminal initiates the random access process after delaying the backoff time.

For another example, the backoff indication information for the priority corresponding to the first radio resource control connection establishment cause includes that: the backoff time threshold corresponding to priority 0 is 0, the backoff time threshold corresponding to priority 1 is 5 (the corresponding value range is (0, 5]), the backoff time threshold corresponding to priority 2 is 10 (the corresponding value range is (5, 10]), the backoff time threshold corresponding to priority 3 is 15 (the corresponding value range is (10, 15]), and the backoff time threshold corresponding to priority 4 is 20 (the corresponding value range is (15, 20]). If it is determined, by using the solution provided in the present application, that the priority of the second radio resource control connection establishment cause of the terminal is 1, it may be determined from the backoff indication information for the priority corresponding to the first radio resource control connection establishment cause that the backoff time threshold corresponding to the priority of the second radio resource control connection establishment cause is 5. Then, a random number (assuming to be 3) is randomly generated within the range of (0, 5], and a product of 3 and a specified time unit is used as the backoff time corresponding to the second radio resource control connection establishment cause. The terminal initiates the random access process after delaying the backoff time.

In the embodiments provided in the present application, by obtaining the configuration information of random access and the second radio resource control connection establishment cause of the terminal, the random access is performed according to the second radio resource control connection establishment cause and the priority indication information of the matched first radio resource control connection establishment cause in the configuration information. The configuration information includes the priority indication information of the first radio resource control connection establishment causes. After the area in which the terminal is located is handed over from a previous satellite cell to a next satellite cell, the terminals in the area can re-access the network side without swarming to access the network simultaneously as in the related art. Instead, each terminal performs the random access by situations according to the priority indication information corresponding to its second radio resource control connection establishment cause, thereby avoiding congestion that may occur in the first random access process of the terminal, improving resource utilization, reducing access time, and improving user experience.

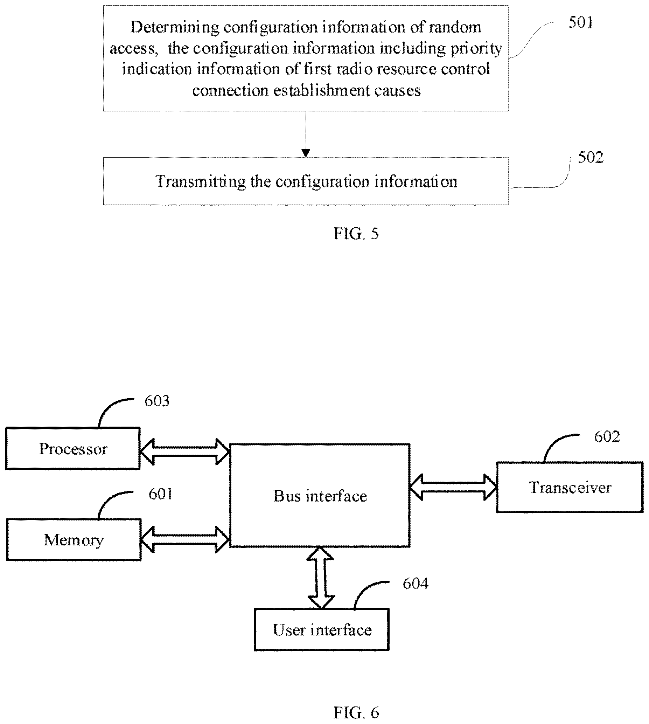

Referring to FIG. 5, an embodiment of the present application provides a random access method, which is applied to a network side. A processing process of the method is as follows.

In step 501, configuration information of random access is determined. The configuration information includes priority indication information of first radio resource control connection establishment causes, and the priority indication information is configured to indicate a priority corresponding to the radio resource control connection establishment cause.

In Step 502, the configuration information is transmitted.

The network side may be a satellite using the regenerative communication mode, or may be a gateway station that communicates with terminals via a satellite using the transparent forwarding mode.

The random access in step 501 is the first random access after a satellite coverage of the area in which the terminal is located is changed. Contents included in the configuration information can be found in the foregoing description of the random access method corresponding to the terminal side, with repeated descriptions omitted.

In a possible implementation, after the configuration information is transmitted, the method further includes:
transmitting an indication information to a terminal. The indication information is configured to indicate whether power-related information of the terminal is involved in determining the priority of the second radio resource control connection establishment cause of the terminal.

In a possible implementation, transmitting the configuration information includes:
transmitting a broadcast message or a dedicated message, the configuration information being carried in the broadcast message or the dedicated message.

As shown in FIG. 6, a terminal provided by an embodiment of the present application includes a memory 601, a transceiver 602, and a processor 603.

The memory 601 is configured to store a computer program. The transceiver 602 is configured to receive and transmit data under control of the processor 603. The processor 603 is configured to read the computer program in the memory 601 and perform the following operations:
obtaining configuration information of random access, the configuration information including priority indication information of first radio resource control connection establishment causes;
obtaining a second radio resource control connection establishment cause of the terminal; and
performing a random access process according to the second radio resource control connection establishment cause and the priority indication information in the configuration information corresponding to the first radio resource control connection establishment cause that matches the second radio resource control connection establishment cause.

In a possible implementation, the processor 603 is specifically configured to:
perform a one-by-one matching between the first radio resource control connection establishment causes in the configuration information and the second radio resource control connection establishment cause;
determine, according to the priority indication information of the matched first radio resource control connection establishment cause, a priority corresponding to the second radio resource control connection establishment cause;
determine whether the priority corresponding to the second radio resource control connection establishment cause is higher than a priority threshold;
if yes, initiate the random access process; and
if no, perform a backoff process.

In a possible implementation, the configuration information further includes backoff indication information for priority of the first radio resource control connection establishment cause, the backoff indication information for priority being configured to generate a backoff time corresponding to the priority of the first radio resource control connection establishment cause.

In a possible implementation, the processor 603 is specifically configured to:
obtain, from the backoff indication information for priority, a backoff level corresponding to the priority corresponding to the second radio resource control connection establishment cause, the backoff level being configured to indicate a backoff time range of the corresponding priority;
determine, according to the backoff time range corresponding to the backoff level, a backoff time corresponding to the second radio resource control connection establishment cause; and
initiate the random access process after delaying the backoff time corresponding to the second radio resource control connection establishment cause.

In a possible implementation, the processor is specifically configured to:
randomly generate a random number within the backoff time range corresponding to the backoff level; and
generate the backoff time corresponding to the second radio resource control connection establishment cause according to the random number.

In a possible implementation, the processor 603 is further configured to:
receive the configuration information of random access sent by a network side; or
obtain the configuration information of random access from predefined information, the predefined information being pre-configured in the terminal or predefined in a related standard.

In a possible implementation, the random access process is the first random access process after a satellite cell coverage change in the area in which the terminal is located.

In a possible implementation, the processor 603 is further configured to:
adjust the priority corresponding to the second radio resource control connection establishment cause according to power-related information of the terminal.

In a possible implementation, the processor 603 is further configured to: obtain indication information before adjusting the priority corresponding to the second radio resource control connection establishment cause according to the obtained power-related information. The indication information is configured to indicate whether the power-related information of the terminal is involved in determining the priority corresponding to the second radio resource control connection establishment cause.

In a possible implementation manner, the power-related information of the terminal includes: a remaining power status of the terminal, or power consumption sensitivity information of the terminal.

In a possible implementation, the radio resource control connection establishment cause includes: an access corresponding to a first service and an access corresponding to a second service that is not completed during the previous satellite cell coverage.

In a possible implementation, the first service includes: an emergency call access service, a voice access service, or a data access service. The voice access service includes a first called voice access and a calling voice access.

In a possible implementation, the second service includes: a second called voice access, a second called data access, or a service access that initiates the second service.

In a possible implementation, the priority indication information includes:
one or more priorities of the first radio resource control connection establishment causes and corresponding first radio resource control connection establishment causes; or
one or more of the first radio resource control connection establishment causes and corresponding priorities.

The transceiver 602 is configured to receive and transmit data under control of the processor 603.

In FIG. 6, a bus architecture may include any number of buses and bridges interconnected with each other, and specifically link various circuits of one or more processors represented by the processor 603 and a memory represented by the memory 601. The bus architecture may further link various other circuits such as a peripheral device, a voltage regulator, and a power management circuit, which are all well-known in the art and thus will not be further described herein. The bus interface provides interfaces. The transceiver 602 may be multiple elements, i.e., include a transmitter and a receiver, and provide units configured to communicate with various other devices on transmission mediums. These transmission mediums include a wireless channel, a wired channel, an optical cable, and the like. For different user equipments, a user interface 604 may also be an interface which may be externally or internally connected with a required device, and the connected device includes, but is not limited to, a keypad, a display, a loudspeaker, a microphone, a j oystick, and the like.

The processor 603 is responsible for managing the bus architecture and general processing, and the memory 601 may store data used by the processor 600 when performing operations.

Optionally, the processor 603 may be a CPU (Central Processing Unit), an ASIC (Application Specific Integrated Circuit), an FPGA (Field-Programmable Gate Array), or a CPLD (Complex Programmable Logic Device). The processor may also use a multi-core architecture.

The processor invokes the computer program stored in the memory, and is configured to perform, according to the obtained executable instruction, any one of the methods provided in the embodiments of the present application. The processor and the memory may also be physically arranged separately.

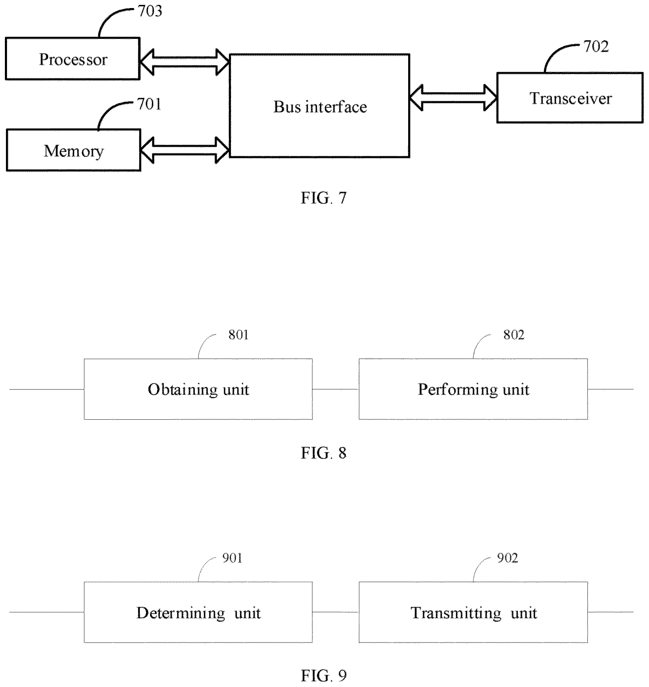

Referring to FIG. 7, an embodiment of the present application provides a random access apparatus, which is applied to a network side. The apparatus includes a memory 701, a transceiver 702, and a processor 703.

The memory 701 is configured to store a computer program. The transceiver 702 is configured to receive and transmit data under control of the processor 703. The processor 703 is configured to read the computer program in the memory 701 and perform the following operations:
determining configuration information of random access, the configuration information including priority indication information of first radio resource control connection establishment causes, and the priority indication information is configured to indicate a priority corresponding to the radio resource control connection establishment cause; and
transmitting the configuration information.

In a possible implementation, the processor 703 is further configured to transmit the indication information to a terminal. The indication information is configured to indicate whether power-related information of the terminal is involved in determining the priority of the second radio resource control connection establishment cause of the terminal.

In a possible implementation, the processor 703 is specifically configured to transmit a broadcast message or a dedicated message. The broadcast message or the system message is configured to carry the configuration information.

The transceiver 702 is configured to receive and transmit data under control of the processor 703.

In FIG. 7, a bus architecture may include any number of buses and bridges interconnected with each other, and specifically link various circuits of one or more processors represented by the processor 703 and a memory represented by the memory 701. The bus architecture may further link various other circuits such as a peripheral device, a voltage regulator, and a power management circuit, which are all well-known in the art and thus will not be further described herein. The bus interface provides interfaces. The transceiver 702 may be multiple components, i.e., include a transmitter and a receiver, and provide units configured to communicate with various other devices on transmission mediums. These transmission mediums include a wireless channel, a wired channel, an optical cable, and the like. The processor 703 is responsible for managing the bus architecture and general processing, and the memory 701 may store data used by the processor 703 when performing operations.

The processor 703 may be a Central Processing Unit (CPU), an Application Specific Integrated Circuit (ASIC), a Field-Programmable Gate Array (FPGA), or a Complex Programmable Logic Device (CPLD). The processor may also use a multi-core architecture.

It should be noted herein that the foregoing apparatus provided by the embodiments of the present application can implement all method steps implemented in the foregoing method embodiments, and the same technical effect can be achieved. The parts and beneficial effects that are the same as those in the method embodiments will not be described in detail herein.

Based on the same invention concept, an embodiment of the present application provides a terminal. The specific implementation of the random access method of the terminal can be found in the description of the method embodiments, with repeated descriptions omitted. Referring to FIG. 8, the terminal includes:
an obtaining unit 801 configured to obtain configuration information of random access, the configuration information including priority indication information of first radio resource control connection establishment causes; obtain a second radio resource control connection establishment cause of the terminal; and
a performing unit 802 configured to perform a random access process according to the second radio resource control connection establishment cause and the priority indication information in the configuration information corresponding to the first radio resource control connection establishment cause that matches the second radio resource control connection establishment cause.

In a possible implementation, the performing unit 802 is further configured to:
perform a one-by-one matching between the first radio resource control connection establishment causes in the configuration information and the second radio resource control connection establishment cause;
determine, according to the priority indication information of the matched first radio resource control connection establishment cause, a priority corresponding to the second radio resource control connection establishment cause;
determine whether the priority corresponding to the second radio resource control connection establishment cause is higher than a priority threshold;
if yes, initiate the random access process; and
if no, perform a backoff process.

In a possible implementation, the configuration information further includes backoff indication information for priority of the first radio resource control connection establishment cause. The backoff indication information for priority is configured to generate a backoff time corresponding to the priority of the first radio resource control connection establishment cause.

In a possible implementation, the performing unit 802 is specifically configured to:
obtain, from the backoff indication information for priority, a backoff level corresponding to the priority corresponding to the second radio resource control connection establishment cause, the backoff level being configured to indicate a backoff time range of the corresponding priority;
determine, according to the backoff time range corresponding to the backoff level, a backoff time corresponding to the second radio resource control connection establishment cause; and
initiate the random access process after delaying the backoff time corresponding to the second radio resource control connection establishment cause.

In a possible implementation, the performing unit 802 is specifically configured to:
randomly generate a random number within the backoff time range corresponding to the backoff level; and
generate the backoff time corresponding to the second radio resource control connection establishment cause according to the random number.

In a possible implementation, the performing unit 801 is further configured to:
receive the configuration information of random access transmitted by a network side; or
obtain the configuration information of random access from predefined information, the predefined information being pre-configured in the terminal or predefined in a related standard.

In a possible implementation, the random access process is the first random access process corresponding to a satellite cell coverage change in the area in which the terminal is located.

In a possible implementation, the performing unit 802 is further configured to:
obtain power-related information of the terminal; and
adjust the priority corresponding to the second radio resource control connection establishment cause according to the power-related information of the terminal.

In a possible implementation, the performing unit 802 is further configured to obtain indication information. The indication information is configured to indicate whether the power-related information of the terminal is involved in determining the priority corresponding to the second radio resource control connection establishment cause.

In a possible implementation manner, the power-related information of the terminal includes a remaining power status of the terminal, or power consumption sensitivity information of the terminal.

In a possible implementation, the radio resource control connection establishment cause includes an access corresponding to a first service and an access corresponding to a second service that is not completed in the previous satellite cell.

In a possible implementation, the first service includes an emergency call access service, a voice access service, or a data access service. The voice access service includes a first called voice access or a calling voice access.

In a possible implementation manner, the second service includes a second called voice access, a second called data access, or a service access that initiates the second service.

In a possible implementation, the priority indication information includes:
one or more priorities of the first radio resource control connection establishment causes and corresponding first radio resource control connection establishment causes; or
one or more of the first radio resource control connection establishment causes and corresponding priorities.

Based on the same invention concept, an embodiment of the present application provides a random access apparatus, which is applied to a network side. The specific implementation of the random access method of the apparatus can be found in the descriptions of the method embodiments, with repeated descriptions omitted. Referring to FIG. 9, the apparatus includes:
a determining unit 901 configured to determine configuration information of random access, the configuration information including priority indication information of first radio resource control connection establishment cause, the priority indication information being configured to indicate a priority corresponding to the radio resource control connection establishment cause; and
a transmitting unit 902 configured to transmit the configuration information.

In a possible implementation, the transmitting unit 902 is further configured to:
transmit the indication information to a terminal. The indication information is configured to indicate whether power-related information of the terminal is involved in determining the priority of the second radio resource control connection establishment cause of the terminal.

In a possible implementation, the transmitting unit 902 is specifically configured to transmit a broadcast message or a dedicated message. The broadcast message or the system message is configured to carry the configuration information.

It should be noted that the division of the units in the embodiments of the present application is illustrative, and is merely a kind of logical function division. In actual implementation, there may be other division ways. In addition, the functional units in each embodiment of the present application may be integrated into one processing unit, or each unit may exist separately physically, or two or more units may be integrated into one unit. The foregoing integrated unit may be implemented in a form of hardware, or may be implemented in a form of a software functional unit.

When the integrated unit is implemented in the form of the software functional unit and sold or used as an independent product, it may be stored in a processor-readable storage medium. Based on such understanding, the technical solutions of the present application essentially or a part that contributes to the prior art or all or a part of the technical solutions may be implemented in a form of a software product. The computer software product is stored in a storage medium and includes several instructions for instructing a computer device (which may be a personal computer, a server, or a network device, etc.) or a processor to perform all or a part of the steps of the methods described in the embodiments of the present application. The foregoing storage medium includes various mediums that can store program codes, such as a USB flash drive, a mobile hard disk, a Read-Only Memory (ROM), a Random Access Memory (RAM), a magnetic disk, or a compact disc, etc.

It should be noted herein that the foregoing apparatus provided by the embodiments of the present application can implement all method steps implemented in the foregoing method embodiments, and the same technical effect can be achieved. The parts and beneficial effects that are the same as those in the method embodiments will not described in detail herein.

Based on the same invention concept, an embodiment of the present application further provides a processor-readable storage medium. The processor-readable storage medium stores a computer program, and the computer program is configured to cause the processor to perform the foregoing random access method on the terminal side or the network side.

The processor-readable storage medium may be any available medium or data storage device accessible to the processor, including but not limited to magnetic memory (e.g., floppy disk, hard disk, magnetic tape, Magnetic Optical disc (MO), etc.), optical memory (e.g., CD, DVD, BD, HVD, etc.), and semiconductor memory (e.g., ROM, EPROM, EEPROM, nonvolatile memory (NAND FLASH), Solid State Disk (SSD)), etc.

It should be understood by those skilled in the art that the embodiments of the present application may be provided as a method, a system, or a computer program product. Therefore, a form of an embodiment in which hardware is completely adopted, an embodiment in which software is completely adopted or an embodiment in which software is combined with hardware may be adopted in the present application. Moreover, a computer program product form implemented on one or more readable storage mediums (which include, but are not limited to a magnetic disk memory, an optical memory and the like) including computer available program codes may be adopted in the present application.

The present application is described with reference to the flowcharts and/or the block diagrams of the methods, the apparatus (system), and the computer program products according to the embodiments of the present application. It should be understood that each flow and/or block in the flowcharts and/or block diagrams, and a combination of processes flows and/or blocks in the flowcharts and/or block diagrams may be implemented by the computer executable instructions. These computer executable instructions may be provided to a processor of a general-purpose computer, a dedicated computer, an embedded processor, or other programmable data processing device to produce a machine, such that an apparatus for implementing the functions specified in one or more flows in the flowcharts and/or one or more blocks in the block diagrams is produced by the instructions executed by the processor of the computer or other programmable data processing devices.

The processor executable instructions may also be stored in a processor-readable memory that can instruct a computer or another programmable data processing device to work in a specific way, so that a manufactured product including an instruction device is generated by the instructions stored in the processor-readable memory, and the instruction device achieves the specified functions in one or more flows in the flowcharts and/or one or more blocks in the block diagrams.

These processor executable instructions may also be loaded onto a computer or other programmable data processing devices such that a series of operation steps are performed on the computer or other programmable devices to produce computer-implemented processing, so that the instructions executed on the computer or other programmable data processing device provide the steps for implementing the specified functions in one or more flows in the flowcharts and/or one or more blocks in the block diagrams.

Apparently, those skilled in the art may make various modifications and variations to the present application without departing from the spirit and scope of the present application. Thus, the present application is also intended to encompass these modifications and variations therein provided that these modifications and variations to the present application fall within the scope of the claims of the present application and the equivalent technologies thereof.

## Claims

1. A random access method applied to a terminal, **characterized in that** the method comprises:
obtaining configuration information of random access, the configuration information comprising priority indication information of first radio resource control connection establishment causes;
obtaining a second radio resource control connection establishment cause of the terminal; and
performing a random access process according to the second radio resource control connection establishment cause and the priority indication information in the configuration information corresponding to the first radio resource control connection establishment cause that matches the second radio resource control connection establishment cause.

2. The method according to claim 1, **characterized in that** performing the random access process according to the second radio resource control connection establishment cause and the priority indication information in the configuration information corresponding to the first radio resource control connection establishment cause that matches the second radio resource control connection establishment cause comprises:
performing a one-by-one matching between the first radio resource control connection establishment causes in the configuration information and the second radio resource control connection establishment cause;
determining, according to the priority indication information of the matched first radio resource control connection establishment cause, a priority corresponding to the second radio resource control connection establishment cause;
determining whether the priority corresponding to the second radio resource control connection establishment cause is higher than a priority threshold;
if yes, initiating the random access process; and
if no, performing a backoff process.

3. The method according to claim 2, **characterized in that** the configuration information further comprises:
backoff indication information for priority of the first radio resource control connection establishment cause, the backoff indication information for priority being configured to generate a backoff time corresponding to the priority of the first radio resource control connection establishment cause.

4. The method according to claim 3, **characterized in that** performing the backoff process comprises:
obtaining, from the backoff indication information for priority, a backoff level corresponding to the priority corresponding to the second radio resource control connection establishment cause, wherein the backoff level is configured to indicate a backoff time range of a corresponding priority;
determining, according to the backoff time range corresponding to the backoff level, a backoff time corresponding to the second radio resource control connection establishment cause; and
initiating the random access process after delaying the backoff time corresponding to the second radio resource control connection establishment cause.

5. The method according to claim 4, **characterized in that** determining, according to the backoff time range corresponding to the backoff level, the backoff time corresponding to the second radio resource control connection establishment cause comprises:
randomly generating a random number within the backoff time range corresponding to the backoff level; and
generating the backoff time corresponding to the second radio resource control connection establishment cause according to the random number.

6. The method according to claim 1, **characterized in that** obtaining the configuration information of random access comprises:
receiving the configuration information of random access sent by a network side;
or
obtaining the configuration information of random access from predefined information, wherein the predefined information is pre-configured in the terminal or predefined in a related standard.

7. The method according to claim 1, **characterized in that** the random access process is the first random access process after a satellite cell coverage change in an area in which the terminal is located.

8. The method according to claim 2, **characterized in that** determining the priority corresponding to the second radio resource control connection establishment cause further comprises:
obtaining power-related information of the terminal; and
adjusting the priority corresponding to the second radio resource control connection establishment cause according to the power-related information of the terminal.

9. The method according to claim 8, before adjusting the priority corresponding to the second radio resource control connection establishment cause according to the obtained power-related information, further comprising:
obtaining indication information, the indication information being configured to indicate whether the power-related information of the terminal is involved in determining the priority corresponding to the second radio resource control connection establishment cause.

10. The method according to claim 7, **characterized in that** the power-related information of the terminal comprises:
a remaining power status of the terminal or power consumption sensitivity information of the terminal.

11. The method according to any one of claims 1 to 10, **characterized in that** the radio resource control connection establishment cause comprises:
at least one of an access corresponding to a first service or an access corresponding to a second service that is not completed during a previous satellite cell coverage.

12. The method according to claim 11, **characterized in that** the first service comprises:
an emergency call access service, a voice access service, or a data access service, the voice access service comprising a first called voice access or a calling voice access.

13. The method according to claim 11, **characterized in that** the second service comprises:
a second called voice access, a second called data access, or a service access that initiates the second service.

14. The method according to any one of claims 1 to 10, **characterized in that** the priority indication information comprises:
one or more priorities of the first radio resource control connection establishment causes and corresponding first radio resource control connection establishment causes;
or
one or more of the first radio resource control connection establishment causes and corresponding priorities.

15. A random access method, applied to a network side, **characterized in that** the method comprises:
determining configuration information of random access, wherein the configuration information comprises priority indication information of first radio resource control connection establishment causes; and
transmitting the configuration information.

16. The method according to claim 15, after transmitting the configuration information, further comprising:
transmitting indication information to a terminal, the indication information being configured to indicate whether power-related information of the terminal is involved in determining the priority of the second radio resource control connection establishment cause of the terminal.

17. The method according to claim 15 or 16, **characterized in that** transmitting the configuration information comprises:
transmitting a broadcast message or a dedicated message, the broadcast message or the dedicated message carrying the configuration information.

18. A terminal, **characterized in that** the terminal comprises a memory, a transceiver, and a processor;
the memory is configured to store a computer program;
the transceiver is configured to receive and transmit data under control of the processor; the processor is configured to read the computer program in the memory and perform the following operations:
obtaining configuration information of random access, the configuration information comprising priority indication information of first radio resource control connection establishment causes;
obtaining a second radio resource control connection establishment cause of the terminal; and
performing a random access process according to the second radio resource control connection establishment cause and the priority indication information in the configuration information corresponding to the first radio resource control connection establishment cause that matches the second radio resource control connection establishment cause.

19. The terminal according to claim 18, **characterized in that** the processor is specifically configured to:
perform a one-by-one matching between the first radio resource control connection establishment causes in the configuration information and the second radio resource control connection establishment cause;
determine, according to the priority indication information of the matched first radio resource control connection establishment cause, a priority corresponding to the second radio resource control connection establishment cause;
determining whether the priority corresponding to the second radio resource control connection establishment cause is higher than a priority threshold;
if yes, initiate the random access process; and
if no, perform a backoff process.

20. The terminal according to claim 19, **characterized in that** the configuration information further comprises:
backoff indication information for priority of the first radio resource control connection establishment cause, the backoff indication information for priority being configured to generate a backoff time corresponding to the priority of the first radio resource control connection establishment cause.

21. The terminal according to claim 20, **characterized in that** the processor is specifically configured to:
obtain, from the backoff indication information for priority, a backoff level corresponding to the priority corresponding to the second radio resource control connection establishment cause, wherein the backoff level is configured to indicate a backoff time range of a corresponding priority;
determine, according to the backoff time range corresponding to the backoff level, a backoff time corresponding to the second radio resource control connection establishment cause; and
initiate the random access process after delaying the backoff time corresponding to the second radio resource control connection establishment cause.

22. The terminal according to claim 21, **characterized in that** the processor is specifically configured to:
randomly generate a random number within the backoff time range corresponding to the backoff level; and
generate the backoff time corresponding to the second radio resource control connection establishment cause according to the random number.

23. The terminal according to claim 18, **characterized in that** the processor is specifically configured to:
receive configuration information of random access sent by a network side;
or
obtain the configuration information of random access from predefined information, wherein the predefined information is pre-configured in the terminal or predefined in a related standard.

24. The terminal according to claim 18, **characterized in that** the random access process is the first random access process after a satellite cell coverage change in an area in which the terminal is located.

25. The terminal according to claim 19, **characterized in that** the processor is further configured to:
obtain power-related information of the terminal; and
adjust the priority corresponding to the second radio resource control connection establishment cause according to the power-related information of the terminal.

26. The terminal according to claim 25, **characterized in that** the processor is further configured to:
obtain indication information before adjusting the priority corresponding to the second radio resource control connection establishment cause according to the obtained power-related information, the indication information being configured to indicate whether the power-related information of the terminal is involved in determining the priority corresponding to the second radio resource control connection establishment cause.

27. The terminal according to claim 25, **characterized in that** the power-related information of the terminal comprises:
a remaining power status of the terminal or power consumption sensitivity information of the terminal.

28. The terminal according to any one of claims 18 to 27, **characterized in that** the radio resource control connection establishment cause comprises:
at least one of an access corresponding to a first service or an access corresponding to a second service that is not completed during a previous satellite cell coverage.

29. The terminal according to claim 28, **characterized in that** the first service comprises:
an emergency call access service, a voice access service, or a data access service, the voice access service comprising a first called voice access or a calling voice access.

30. The terminal according to claim 28, **characterized in that** the second service comprises:
a second called voice access, a second called data access, or a service access that initiates the second service.

31. The terminal according to any one of claims 18 to 27, **characterized in that** the priority indication information comprises:
one or more priorities of the first radio resource control connection establishment causes and corresponding first radio resource control connection establishment causes;
or
one or more of the first radio resource control connection establishment causes and corresponding priorities.

32. A random access apparatus, applied to a network side, **characterized in that** the random access apparatus comprises a memory, a transceiver, and a processor,
the memory is configured to store a computer program, the transceiver is configured to receive and transmit data under control of the processor, and the processor is configured to read the computer program in the memory and perform the following operations:
determining configuration information of random access, wherein the configuration information comprises priority indication information of first radio resource control connection establishment causes; and
transmitting the configuration information.

33. The apparatus according to claim 32, **characterized in that** the processor is further configured to:
transmit indication information to a terminal, the indication information being configured to indicate whether power-related information of the terminal is involved in determining the priority of the second radio resource control connection establishment cause of the terminal.

34. The apparatus according to claim 32 or 33, **characterized in that** the processor is specifically configured to:
transmit a broadcast message or a dedicated message, the broadcast message or the system message being configured to carry the configuration information.

35. A terminal, **characterized in that** the terminal comprises:
an obtaining unit configured to obtain configuration information of random access, the configuration information comprising priority indication information of first radio resource control connection establishment causes; and obtain a second radio resource control connection establishment cause of the terminal; and
a performing unit configured to perform a random access process according to the second radio resource control connection establishment cause and the priority indication information in the configuration information corresponding to the first radio resource control connection establishment cause that matches the second radio resource control connection establishment cause.

36. A random access apparatus, applied to a network side, **characterized in that** the apparatus comprises:
a determining unit configured to determine configuration information of random access, wherein the configuration information comprises priority indication information of first radio resource control connection establishment causes; and
a transmitting unit configured to transmit the configuration information.

37. A processor-readable storage medium, **characterized in that** the processor-readable storage medium stores a computer program, and the computer program is configured to cause the processor to perform the method according to any one of claims 1 to 17.
